(19) Europäisches Patentamt
European Patent Office
Office européen des brevets

(11) **EP 2 398 676 B1**

(12) **EUROPÄISCHE PATENTSCHRIFT**

(45) Veröffentlichungstag und Bekanntmachung des Hinweises auf die Patenterteilung:
**29.05.2013 Patentblatt 2013/22**

(21) Anmeldenummer: **09802134.8**

(22) Anmeldetag: **21.12.2009**

(51) Int Cl.:
**B60R 21/0132** (2006.01)

(86) Internationale Anmeldenummer:
**PCT/EP2009/067621**

(87) Internationale Veröffentlichungsnummer:
**WO 2010/094363 (26.08.2010 Gazette 2010/34)**

(54) **VERFAHREN UND STEUERGERÄT ZUR KLASSIFIKATION EINER KOLLISION EINES FAHRZEUGS**

METHOD AND CONTROL DEVICE FOR CLASSIFYING A COLLISION OF A VEHICLE

PROCÉDÉ ET APPAREIL DE COMMANDE POUR LA CLASSIFICATION D'UNE COLLISION D'UN VÉHICULE

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **20.02.2009 DE 102009001027**

(43) Veröffentlichungstag der Anmeldung:
**28.12.2011 Patentblatt 2011/52**

(73) Patentinhaber: **Robert Bosch GmbH 70442 Stuttgart (DE)**

(72) Erfinder:
• **DOERR, Alfons**
  **70597 Stuttgart (DE)**
• **HIEMER; Marcus**
  **88074 Kehlen (DE)**

(56) Entgegenhaltungen:
**EP-A1- 1 873 020      DE-A1-102004 029 374**
**US-A1- 2004 002 802   US-B2- 7 284 769**

**Beschreibung**

Stand der Technik

Die vorliegende Erfindung bezieht sich auf ein Verfahren gemäß Anspruch 1, ein Steuergerät gemäß Anspruch 10, sowie ein Computerprogrammprodukt gemäß Anspruch 11.

In bisherigen Auslösealgorithmen für Insassenschutzmittel eines Fahrzeugs wird im Wesentlichen die lineare Bewegung des Fahrzeuges berücksichtigt. Diese Bewegung wird häufig durch die Bewegung einer Punktmasse approximiert.

Für die Kollisionsklassifikation (Kollision = Crash) können die Signale von linearen Beschleunigungssensoren verwendet werden. Dabei können zwei Kennlinien zum Einsatz kommen, von denen die eine zur Unterdrückung von Misuse und die andere zur Generierung der Auslöseentscheidung der Insassenschutzmittel dient. Dabei wird die Signalenergie evaluiert und eine Auslösung der Insassenschutzmittel erfolgt nur dann, wenn die Signalenergie nachhaltig vorhanden ist. In diesem Konzept werden lediglich Linearbewegungen berücksichtigt.

Bisher werden rotatorische Kollisionen in einer frühen Kollisionsphase in ihrer Kollisionsschwere unterschätzt. Die Erkennung von Offset-Kollisionen, wie z.B. der im EuroNCAP gefahrenen Crashtype ODB (Offset Deformable Barrier), kann häufig nur mittels aufwändiger Signalverarbeitung rechtzeitig bewerkstelligt werden.

Aus der DE 101 49 112 A1 geht ein Verfahren zur Bildung einer Auslöseentscheidung für ein Rückhaltesystem hervor, wobei insbesondere Situationen behandelt werden, in denen das Fahrzeug nach einem Schleudervorgang seitlich rutscht und dann auf einem Untergrund mit einem hohen Reibungskoeffizienten gerät. Es wird die Auslöseentscheidung in Abhängigkeit von den Fahrdynamikdaten bestimmt, wobei als die Fahrdynamikdaten ein Schwimmwinkel in Verbindung mit einer Fahrzeugquergeschwindigkeit und einer Fahrzeugkippbewegung verwendet werden. Die Auslöseentscheidung wird durch einen Schwellwertvergleich gebildet.

Die DE 10 2004 029 374 A1 befasst sich mit einem Verfahren zur Bestimmung einer Auslöseentscheidung für Rückhaltemittel eines Kraftfahrzeuges bei einem vorangegangenen Schleudermanöver. Dabei werden vorerst eine Gierrate, ein erster Fahrdynamikparametersatz und ein Kontextparametersatz bereitgestellt. Die Auslöseentscheidung wird mittels der Gierrate, des ersten Fahrzeugparametersatzes und des Kontextparametersatzes bestimmt.

Offenbarung der Erfindung

Vor diesem Hintergrund wird mit der vorliegenden Erfindung ein Verfahren zur Klassifikation einer Kollision eines Fahrzeugs, weiterhin ein Steuergerät, das dieses Verfahren verwendet sowie schließlich ein entsprechendes Computerprogrammprodukt gemäß den unabhängigen Patentansprüchen vorgestellt. Vorteilhafte Ausgestaltungen ergeben sich aus den jeweiligen Unteransprüchen und der nachfolgenden Beschreibung.

Die Erfindung basiert auf der Erkenntnis, dass sich die reale Fahrzeugbewegung nicht ausschließlich durch eine Linearbewegung beschreiben lässt. Vielmehr zeichnen sich real im Feld vorkommende Kollisionen dadurch aus, dass sowohl Linear- als auch Rotationsbewegungen in der Kollision auftreten. Erfindungsgemäß wird daher neben der linearen kinetischen Energie auch die rotatorische kinetische Energie und ihre Nachhaltigkeit berücksichtigt. Damit können Kollisionen mit Rotationen angemessen berücksichtigt werden.

Der Kern der Erfindung besteht in der Berücksichtigung von rotatorischer Signalenergie, sowohl bei realen Kollisionen als auch bei Kollisionen, die in der Crashhalle gefahren werden. Eine Auslösung von Insassenschutzmitteln kann erfindungsgemäß erfolgen, wenn entweder eine nachhaltige Rotationsleistung oder eine nachhaltige Linearleistung auftritt. Dazu können bekannte Doppelkennlinien und Algorithmen angewendet werden.

Durch die Kombination von linearer und rotatorischer Bewegung gelingt die rechtzeitige Erkennung von bisher "unterschätzten" Kollisionen. Dies führt zu einer verbesserten Bestimmung der Kollisionsschwere und des Auslösezeitpunktes. Vorteilhafterweise können dadurch rotatorische Kollisionen bereits in einer frühen Kollisionsphase in ihrer Kollisionsschwere erkannt werden. Die Erkennung Offset-Kollisionen kann dadurch auch mittels einfacher Signalverarbeitung rechtzeitig bewerkstelligt werden. Erfindungsgemäß ist auch eine Berücksichtigung der gesamten, während der frühen Kollisionsphase umgesetzten mechanischen Leistung, also der Gesamtleistung bzw. Gesamtenergie möglich. Die Nachhaltigkeit der bei der Kollision auftretenden Rotationsenergie und/oder Rotationsleistung kann berücksichtigt werden, indem eine Doppelkennlinie eingesetzt wird. Dadurch kann die Robustheit der Auslöseentscheidung erhöht werden. Der erfindungsgemäße Ansatz ermöglicht auch eine synergetische Nutzung und damit Einsparung von Sensorik in Systemen der aktiven und passiven Sicherheit. So können beispielsweise Sensoren des ESP-Systems als Crashsensoren des Airbag-Systems Verwendung finden und somit neue Airbag-Funktionalitäten bereitgestellt werden.

Die vorliegende Erfindung schafft ein Verfahren zur Klassifikation einer Kollision eines Fahrzeugs, das die folgenden Schritte umfasst: Empfangen eines Linearsignals über eine Schnittstelle, wobei das Linearsignal eine Information über eine Linearbewegung des Fahrzeugs umfasst; Empfangen eines Rotationssignals über eine Schnittstelle, wobei das Rotationssignal eine Information über eine Rotationsbewegung des Fahrzeugs umfasst; und Bereitstellen eines Auswertesignals basierend auf dem Linearsignal und dem Rotationssignal, wobei das Auswertesignal eine Information über die Kollision aufweist.

Das Linearsignal und das Rotationssignal können von Sensoren bereitgestellte Signale repräsentieren. Bei den Sensoren kann es sich um Beschleunigungssensoren handeln, die in dem Fahrzeug angeordnet sind. Bei der Linearbewegung kann es sich um eine Bewegung des Fahrzeugs in Fahrtrichtung handeln. Bei der Rotationsbewegung kann es sich um eine Drehbewegung, beispielsweise eine Gierbewegung handeln. Das Auswertesignal kann an einer Schnittstelle bereitgestellt werden. Die Information über die Kollision kann geeignet sein, um die Art der Kollison anzuzeigen. Auch kann die Information über die Kollision geeignet sein, um speziell solche Kollisionen anzuzeigen, die die Auslösung eines Insassenschutzmittels erfordern. Somit kann die Information über die Kollision eingesetzt werden, um eine Auslöseentscheidung für ein Insassenschutzmittel zu treffen.

Das Auswertesignal kann durch eine Verknüpfung eines linearen Auswertesignals und eines rotatorischen Auswertesignals bestimmt werden, wobei das lineare Auswertesignal eine auf dem Linearsignal basierende Information über die Kollision und das rotatorische Auswertesignal eine auf dem Rotationssignal basierende Information über die Kollision aufweist. Die Verknüpfung der linearen und der rotatorischen Komponente ermöglicht eine verbesserte Erkennung und Klassifikation der Kollision.

Gemäß einer Ausgestaltung kann basierend auf dem Linearsignal sowohl eine Auslösekollision (Fire), ansprechend auf die ein Rückhaltemittel ausgelöst werden soll als auch eine Nicht-Auslösekollision (Misuse), ansprechend auf die das Rückhaltemittel nicht ausgelöst werden soll erkannt werden, und das lineare Auswertesignal kann ausgebildet sein, um bei einer erkannten Auslösekollision einen ersten Wert und bei einer erkannten Nicht-Auslösekollision einen zweiten Wert aufzuweisen. Durch die Unterscheidung zwischen Auslösekollisionen und Nicht-Auslösekollisionen können Fehlauslösungen von Insassenschutzmitteln verhindert werden.

Dazu kann das Linearsignal eine Information über eine lineare Beschleunigung des Fahrzeugs umfassen und zum Erkennen der Auslösekollision und der Nicht-Auslösekollision kann die folgende Gleichung ausgewertet werden:

$$a_x = \frac{P_{Lin}}{m} \cdot \frac{1}{dv}$$

mit
$a_x$ : lineare Beschleunigung des Fahrzeugs
$P_{Lin}$ : lineare kinetische Leistung
$m$ : Masse des Fahrzeugs
$dv$ : lineare Geschwindigkeitsänderung des Fahrzeugs.

Ferner kann basierend auf dem Rotationssignal sowohl eine Auslösekollision als auch eine Nicht-Auslösekollision erkannt werden, und das rotatorische Auswertesignal kann ausgebildet sein, um bei einer erkannten Auslösekollision einen ersten Wert und bei einer erkannten Nicht-Auslösekollision einen zweiten Wert aufzuweisen. Auf diese Weise können wiederum Fehlauslösungen vermieden werden.

Dazu kann das Rotationssignal eine Information über eine rotatorische Geschwindigkeit des Fahrzeugs umfassen und zum Erkennen der Auslösekollision und der Nicht-Auslösekollision kann die folgende Gleichung ausgewertet werden:

$$\ddot{\psi} = \frac{P_{Rot}}{J} \cdot \frac{1}{\dot{\psi}}$$

mit
$\ddot{\psi}$ : rotatorische Beschleunigung des Fahrzeugs
$P_{Rot}$ : rotatorische kinetische Leistung
$m$ : Masse des Fahrzeugs

$\dot{\psi}$ : rotatorische Geschwindigkeit des Fahrzeugs.

Gemäß einem weiteren Ausführungsbeispiel kann die Information über die Kollision aus dem Linearsignal und dem Rotationssignal unter Einsatz eines mehrdimensionalen Klassifikators bestimmt werden. Somit kann zur Auswertung der in dem Linearsignal und dem Rotationssignal enthaltenen Information ein Neuronales Netz, ein Hidden Markov Modell oder eine Support Vector Machine eingesetzt werden.

Das Linearsignal kann eine Information über eine lineare kinetische Energie des Fahrzeugs und das Rotationssignal eine Information über eine rotatorische kinetische Energie des Fahrzeugs repräsentieren und die Information über die Kollision kann basierend auf der linearen kinetischen Energie und der rotatorischen kinetischen Energie bestimmt werden. Somit kann die bei der Kollision auf das Fahrzeug einwirkende Gesamtenergie berücksichtigt werden.

Beispielsweise kann die Information über die Kollision basierend auf einer linearen Beschleunigung, einer linearen Geschwindigkeit, einer rotatorischen Beschleunigung und einer rotatorischen Geschwindigkeit des Fahrzeugs bestimmt werden. Die erforderlichen Werte können durch bekannte Sensoren bereitgestellt werden bzw. mittels einfacher Signalverarbeitung aus Sensorsignalen ermittelt werden.

Auch durch die Ausführungsvariante der Erfindung in Form eines Steuergeräts kann die der Erfindung zugrunde liegende Aufgabe schnell und effizient gelöst werden. Unter einem Steuergerät kann vorliegend ein elektrisches Gerät verstanden werden, das Sensorsignale verarbeitet und in Abhängigkeit davon Steuersignale ausgibt. Das Steuergerät kann eine Schnittstelle aufweisen, die hard-und/oder softwaremäßig ausgebildet sein kann. Bei einer hardwaremäßigen Ausbildung können die Schnittstellen beispielsweise Teil eines sogenannten System-ASICs sein, der verschiedenste Funktionen des Steuergeräts beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

Von Vorteil ist auch ein Computerprogrammprodukt mit Programmcode, der auf einem maschinenlesbaren Träger wie einem Halbleiterspeicher, einem Festplattenspeicher oder einem optischen Speicher gespeichert ist und zur Durchführung des Verfahrens nach einem der vorstehend beschriebenen Ausführungsformen verwendet wird, wenn das Programm auf einem Steuergerät ausgeführt wird.

Die Erfindung wird nachstehend anhand der beigefügten Zeichnungen beispielhaft näher erläutert. Es zeigen:

Fig. 1    ein Blockschaltbild eines Systems gemäß einem Ausführungsbeispiel der vorliegenden Erfindung;

Fig. 2    ein Blockschaltbild eines Systems gemäß einem weiteren Ausführungsbeispiel der vorliegenden Erfindung;

Fig. 3    eine Darstellung rotatorischer Signalenergie bei einer Kollision; und

Fig. 4    eine Darstellung linearer Signalenergie bei einer Kollision.

Gleiche oder ähnliche Elemente können in den nachfolgenden Figuren durch gleiche oder ähnliche Bezugszeichen versehen sein. Ferner enthalten die Figuren der Zeichnungen, deren Beschreibung sowie die Ansprüche zahlreiche Merkmale in Kombination. Einem Fachmann ist dabei klar, dass diese Merkmale auch einzeln betrachtet werden oder sie zu weiteren, hier nicht explizit beschriebenen Kombinationen zusammengefasst werden können.

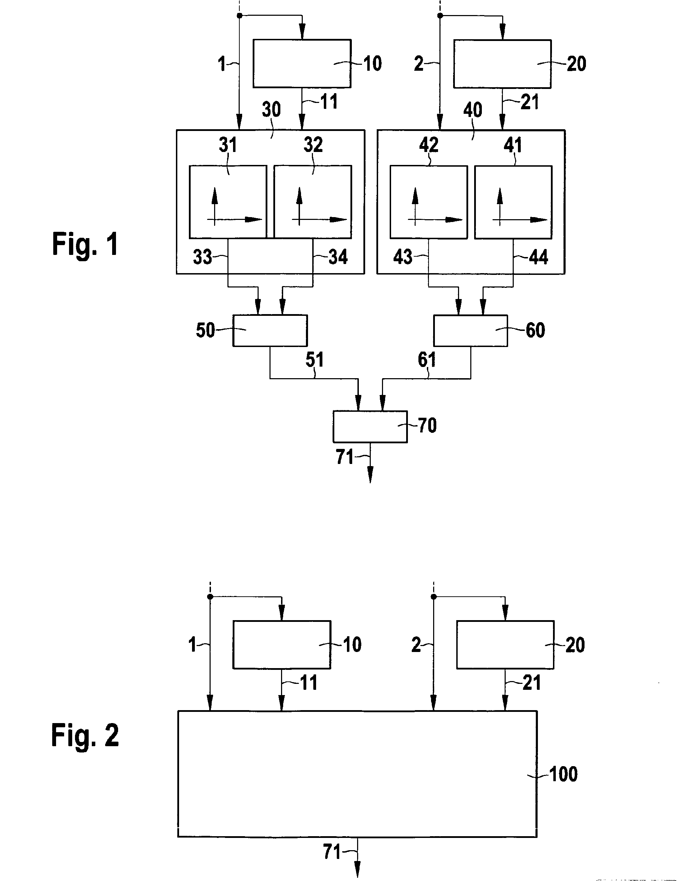

Fig. 1 zeigt ein Blockschaltbild eines Systems zur Klassifikation einer Kollision eines Fahrzeugs, gemäß einem Ausführungsbeispiel der vorliegenden Erfindung. Insbesondere sind ein möglicher Aufbau und eine mögliche Funktion des Systems gezeigt. Das System ist ausgebildet, um das erfindungsgemäßen Verfahren zur Klassifikation einer Kollision eines Fahrzeugs auszuführen.

Gemäß dem erfindungsgemäßen Verfahren zur Klassifikation kann ein Linearsignal 1 über eine Schnittstelle empfangen werden. Das Linearsignal 1 kann eine Information über eine Linearbewegung des Fahrzeugs aufweisen. Beispielsweise kann das Linearsignal 1 eine lineare Beschleunigung $a_x$ des Fahrzeugs repräsentieren. Ferner kann ein Rotationssignal 2 über die Schnittstelle empfangen werden, wobei das Rotationssignal 2 eine Information über eine Rotationsbewegung des Fahrzeugs umfassen kann. Beispielsweise kann das Rotationssignal 2 eine Winkelgeschwindigkeit des Fahrzeugs repräsentieren. Basierend auf dem Linearsignal 1 und dem Rotationssignal 2 kann eine Information über die Kollision ermittelt werden und in Form eines Auswertesignals 71 an einer Schnittstelle bereitgestellt werden. Aufgrund der Information über die Kollision eignet sich das Auswertesignal 71 zur Ansteuerung von Insassenschutzmitteln.

Das System kann eine Einrichtung 10, beispielsweise in Form eines Integrators und eine Einrichtung 20, beispielsweise in Form eines Differenzierers aufweisen. Ferner kann das System eine Einrichtung 30 zum Auswerten einer linearen kinetischen Energie aufweisen, die wiederum eine Einrichtung 31 zum Erkennen einer Nicht-Auslösekollision (Misuse) und eine Einrichtung 32 zum Erkennen einer Auslösekollsion (Fire/NoFire) aufweisen. Entsprechend dazu kann eine Einrichtung 40 zum Auswerten einer rotorischen kinetischen Energie eine Einrichtung 41 zum Erkennen einer Auslösekollsion (Fire/NoFire) und eine Einrichtung 42 zum Erkennen einer Nicht-Auslösekollision (Misuse) aufweisen. Mittels der Einrichtungen 31,32 bzw. der Einrichtungen 41, 42 kann eine Unterscheidung zwischen der Nicht-Auslösekollision und der Auslösekollision getroffen werden.

Das Linearsignal 1 kann von der Einrichtung 10 und der Einrichtung 30 zum Auswerten einer linearen kinetischen Energie empfangen werden. Die Einrichtung 10 ist ausgebildet, um ansprechend auf das Linearsignal ein Signal 11 an die Einrichtung 30 zum Auswerten einer linearen kinetischen Energie bereitzustellen. Das Signal 11 kann eine Geschwindigkeitsänderung dv des Fahrzeugs repräsentieren. Die Einrichtung 31 zum Erkennen einer Nicht-Auslösekollision ist ausgebildet, um basierend auf dem Linearsignal 1 und dem Signal 11 ein Signal 33 an eine Verknüpfungseinrichtung 50 bereitzustellen. Die Einrichtung 32 zum Erkennen einer Auslösekollision ist ausgebildet, um basierend auf dem Linearsignal 1 und dem Signal 11 ein Signal 34 an die Verknüpfungseinrichtung 50 bereitzustellen. Die Signale 33, 34 können ausgebildet sein, um anzuzeigen, ob eine Auslösekollision bzw. eine Nicht-Auslösekollision erkannt wurde. Bei der Verknüpfungseinrichtung 50 kann es sich um ein UND-Gatter handeln kann. Die Verknüpfungseinrichtung 50 kann ausgebildet sein, um ein lineares Auswertesignal 51 an eine Verknüpfungseinrichtung 70 bereitzustellen, bei der es sich um ein ODER-Gatter handeln kann.

In entsprechender Weise kann das Rotationssignal 2 von der Einrichtung 20 und der Einrichtung 40 zum Auswerten einer rotatorischen kinetischen Energie empfangen werden. Die Einrichtung 20 ist ausgebildet, um ansprechend auf das Rotationssignal ein Signal 21 an die Einrichtung 40 zum Auswerten einer rotatorischen kinetischen Energie bereitzustellen. Das Signal 21 kann eine Gierbeschleunigung des Fahrzeugs repräsentieren. Die Einrichtung 41 zum Erkennen einer Auslösekollision ist ausgebildet, um basierend auf dem Rotationssignal 2 und dem Signal 21 ein Signal 44 an eine Verknüpfungseinrichtung 60 bereitzustellen, bei der es sich um ein UND-Gatter handeln kann. Die Einrichtung 42 zum Erkennen einer Nicht-Auslösekollision ist ausgebildet, um basierend auf dem Rotationssignal 2 und dem Signal 21 ein Signal 43 an die Verknüpfungseinrichtung 60 bereitzustellen. Die Signale 43, 44 können ausgebildet sein, um anzuzeigen, ob eine Auslösekollision bzw. eine Nicht-Auslösekollision erkannt wurde. Bei der Verknüpfungseinrichtung 60 kann es sich um ein UND-Gatter handeln. Die Verknüpfungseinrichtung 60 kann ausgebildet sein, um ein rotatorisches Auswertesignal 61 an die Verknüpfungseinrichtung 70 bereitzustellen. Die Verknüpfungseinrichtung 70 ist ausgebildet, um basierend auf dem linearen Auswertesignal 51 und dem rotatorischen Auswertesignal 61 das Auswertesignal 73 bereitzustellen.

Gemäß dem in Fig. 1 gezeigten Ausführungsbeispiel können in einem linearen Signalpfad Daten 1 eines linearen Beschleunigungssensors, z.B. die x-Beschleunigung in dem Integrator 10, zeitlich integriert werden und das Signal 11, z.B. den Geschwindigkeitsabbau dv liefern. Statt eines Integrators können im Block 10 auch ein Fensterintegrator oder ein Filter, das den Fensterintegrator approximiert umgesetzt sein. Die Größen 1, 11 werden im Block 30 verarbeitet, in dem die lineare kinetische Energie bzw. Leistung evaluiert werden. Die lineare kinetische Energie $E_{Lin}$ berechnet sich zu

$$E_{Lin} = \frac{1}{2} \, m \cdot dv^2 \Rightarrow P_{Lin} = \frac{d}{dt} E_{Lin} = m \cdot dv \cdot a_x$$

$$\Rightarrow a_x = \frac{P_{Lin}}{m} \cdot \frac{1}{dv}$$

Der Gleichung ist zu entnehmen, das zwischen dem Signal 1 (im Beispiel ax) und dem Signal 11 (im Beispiel dv) ein physikalischer Zusammenhang besteht. Dieser Zusammenhang wird in dem in Fig. 1 gezeigten System in einem Misuse-Block 31 sowie in einem Fire/NoFire-Block 32 berücksichtigt.

Wird davon ausgegangen, dass die lineare Leistung einer äusseren Einwirkung auf das Fahrzeugs nur in einer signifikanten Fahrzeugkollision einen bestimmten Schwellwert der Crashleistung $P_{Lin}$ überschreitet, so ergibt sich aus dem physikalischen Zusammenhang der Gleichung eine Hyperbelartige Schwellwertfunktion $a_x(dv, P_{Lin})$, die in einem ax-dv Diagramm die Bereiche zwischen einem Crash-und einem Misuse-Event eindeutig trennt. So ist im Falle einer Vollbremsung der Impulsübertrag dv auf das Fahrzeug groß, die wirkende Kraft ax auf das Sensorelement jedoch klein. Im Falle eines Hammerschlags ist die wirkende Kraft auf das Sensorelement groß, jedoch der Impulsübertrag auf das Fahrzeugs klein. Nimmt jedoch während einer Fahrzeugkollison die auf das Sensorelement wirkende Kraft ax im Vergleich zum Implusübertrag dv überproportional zu, so ist entweder von einer hohen Kollsionsgeschwindigkeit oder einer harten Kollisionsbarriere auszugehen, die eine Aktivierung von Rückhaltemitteln erfordert. Steigt die Verzögerung ax in der Fahrzeugkollision relativ wenig gegenüber dem Impulstransfer, so ist von einer niedriger Kollsionsgeschwindigkeit und einer weichen Barriere auszugehen. In diesem Fall wird die Aktivierung von Rückhaltemitteln nicht erforderlich sein.

Im Block 31 wird ausgeschlossen, dass die Signalenergie durch einen Misuse eingebracht wurde, also groß und in der Regel kurz ist. Für eine lineare Kollision kann ein Misuse etwa ein Hammerschlag oder ein Bordsteinrempler sein, der im Sensorsignal 1 eine kurze Längsbeschleunigung verursachen könnte. Da ein solches, durch einen Misuse hervorgerufenes Signal 1 nicht zur Auslösung eines Insassenschutzmittels ausreichen sollte, wird ferner die Nachhaltigkeit der eingebrachten Signalenergie untersucht. Im Block 32 wird die Nachhaltigkeit der linearen Signalenergie berücksichtigt und evaluiert. Beide Blöcke 31, 32 beinhalten zweidimensionale Kennlinien, deren Überschreitung geprüft wird. Ist die Kennlinie in Block 31 ein oder in einer anderen Ausprägung der Erfindung mehrmals hintereinander überschritten, so ändert sich der Zustand der Signalleitung 33 von "0" auf "1". Ist die Kennlinie in Block 32 ein oder in einer anderen Ausprägung der Erfindung mehrmals hintereinander überschritten, so ändert sich der Zustand der Signalleitung 34 von "0" auf "1". Die beiden Signale 33, 34 werden im Block 50 einer logischen UND-Operation unterzogen. Auf diese Art und Weise enthält das Signal 51 genau dann eine logische "1", wenn es sich nicht um einen Misuse handelt und wenn die Signalenergie nachhaltig ist, es sich also um eine Kollision handelt, bei dem die Rückhaltemittel angesteuert werden sollen.

In entsprechender Weise können in einem rotatorischen Signalpfad Daten 2 eines Drehratensensors, z.B. die Gierrate in dem Differenzierer 20 bzgl. der Zeit abgeleitet werden und das abgeleitete Signal 21, beispielsweise die Gierbeschleunigung liefern. Der Differenzierer 20 kann dabei über eine Differenzoperation zwischen zwei gefilterten oder nicht gefilterten, aufeinanderfolgenden oder zeitlich versetzten Signalwerten des Signals 2 umgesetzt sein. Eine weitere vorteilhafte Umsetzung des Differenzierers 20 kann ein Rekursiver Least Squares Schätzer sein. Die Signale 2 und 21 werden im Block 40 verarbeitet, in dem die rotatorische kinetische Energie bzw. Leistung evaluiert werden. Die rotatorische kinetische Energie $E_{Rot}$ berechnet sich zu

$$E_{Rot} = \frac{1}{2} J \cdot \dot{\Psi}^2 \Rightarrow P_{Rot} = \frac{d}{dt} E_{Rot} = J \cdot \dot{\Psi} \cdot \ddot{\Psi}$$

$$\Rightarrow \ddot{\Psi} = \frac{P_{Rot}}{J} \cdot \frac{1}{\dot{\Psi}}$$

Der Gleichung ist zu entnehmen, dass ein direkter physikalischer Zusammenhang zwischen den Signalen 2, im Beispiel die Gierrate und 21, z.B. die Gierbeschleunigung besteht. Dieser Zusammenhang wird in dem in Fig. 1 gezeigten System in dem Misuse-Block 42 und dem Fire/NoFire Block 41 berücksichtigt. Im Block 42 wird ausgeschlossen, dass die Signalenergie durch einen Misuse eingebracht wurde, also groß und in der Regel kurz ist. Für eine rotatorische Kollision könnte dies etwa ein Fußball sein, der seitlich gegen den Kotflügel geschossen wird oder eine seitliche Kollision mit einem Moped sein. Solche Kollisionen können im Sensorsignal eine kurze Gierbeschleunigung verursachen. Da ein solches Signal nicht zur Auslösung von Insassenschutzmitteln ausreichen sollte, wird weiterhin die Nachhaltigkeit der eingebrachten Signalenergie untersucht. Im Block 41 wird daher die Nachhaltigkeit der rotatorischen Signalenergie berücksichtigt und evaluiert. Beide Blöcke 41, 42 beinhalten zweidimensionale Kennlinien, deren Überschreitung geprüft wird. Ist die Kennlinie in Block 42 ein oder in einer anderen Ausprägung der Erfindung mehrmals hintereinander überschritten, so ändert sich der Zustand der Signalleitung 43 von "0" auf "1". Ist die Kennlinie in Block 41 ein oder in einer anderen Ausprägung der Erfindung mehrmals hintereinander überschritten, so ändert sich der Zustand der Signalleitung 44 von "0" auf "1". Die beiden Signale 43, 44 werden im Block 60 einer logischen UND-Operation unterzogen. Auf diese Art und Weise enthält das Signal 61 genau dann eine logische 1, wenn es sich nicht um einen Misuse handelt und wenn die Signalenergie nachhaltig ist, es sich also um einen Crash handelt, bei dem die Rückhaltemittel angesteuert werden sollen.

Eine Fusion des linearen und des rotatorischen Pfades kann in der Verknüpfungsvorrichtung 70 erfolgen. Liegt entweder eine rotatorische Kollision oder eine lineare Kollision vor, so wird die Auslöseentscheidung getriggert. Dieser Logik wird die Fusion der beiden Pfade in der logischen ODER-Operation in Block 70 gerecht. Ausgang des Systems stellt ein Feuerflag 71 dar, das die Rückhaltemittel ansteuern kann.

Fig. 2 zeigt ein Blockschaltbild eines erfindungsgemäßen Systems zur Klassifikation einer Kollision eines Fahrzeugs, gemäß einem weiteren Ausführungsbeispiel der vorliegenden Erfindung. Dabei kommt anstelle des in Fig. 1 beschriebenen Aufbaus ein mehrdimensionaler Klassifikator 100 zum Einsatz. Der mehrdimensionale Klassifikator 100 ist ausgebildet, um basierend auf dem Linearsignal 1, dem Signal 11, dem Rotationssignal 2 und dem Signal 21 das Auswertesignal 71 zu generieren. Das Linearsignal 1 kann wiederum die lineare Beschleunigung $a_x$, das Signal 11 die Geschwindigkeitsänderung dv, das Rotationssignal 2 die Winkelgeschwindigkeit $\psi$ und das Signal 21 kann die rotatorische Beschleunigung des Fahrzeugs $\tilde{\psi}$ umfassen. Gemäß diesem Ausführungsbeispiel kann der Klassifikator 100 als vierdimensionaler Klassifikator ausgebildet sein. Eine vorteilhafte Ausprägung des mehrdimensionalen Klassifikators 100 sind Neuronale Netze. Eine weitere vorteilhafte Ausprägung besteht in der Support Vector Machine. Das auf der Support Vector Machine beruhende Verfahren zeichnet sich dadurch aus, dass es nachgewiesen mit geringen Mikroprozessor-Ressourcen implementierbar ist und darüber hinaus mit sehr kleinen Kollisionssets auskommt. Dies ist ein Vorteil insbesondere gegenüber Neuronalen Netzen.

Die erfindungsgemäße Fusion des linearen Pfades und des rotatorischen Pfades wird dem Umstand gerecht, dass Real World Crashszenarien nicht ausschließlich durch eine Punktmasse beschrieben werden können, die frontal gegen eine Wand oder Barriere fährt. Erst die Kombination von rotatorischer und linearer Bewegung beschreibt die Kollision Crash umfassend.

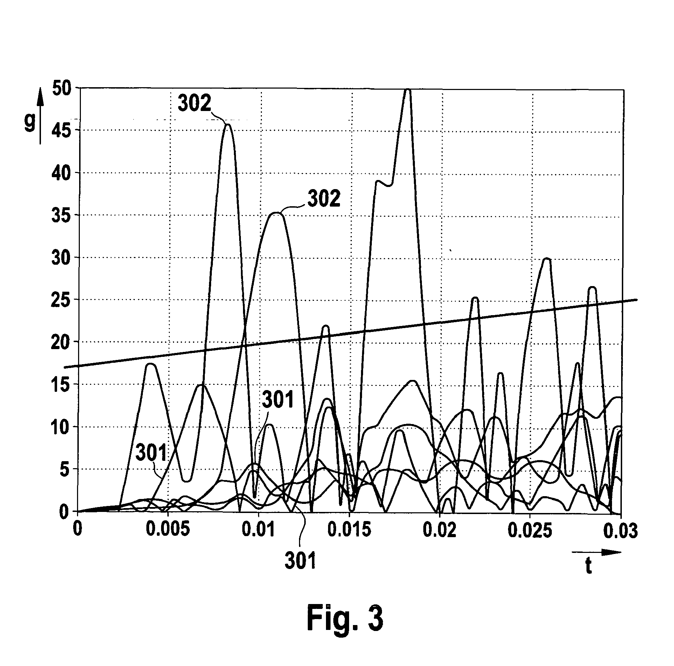

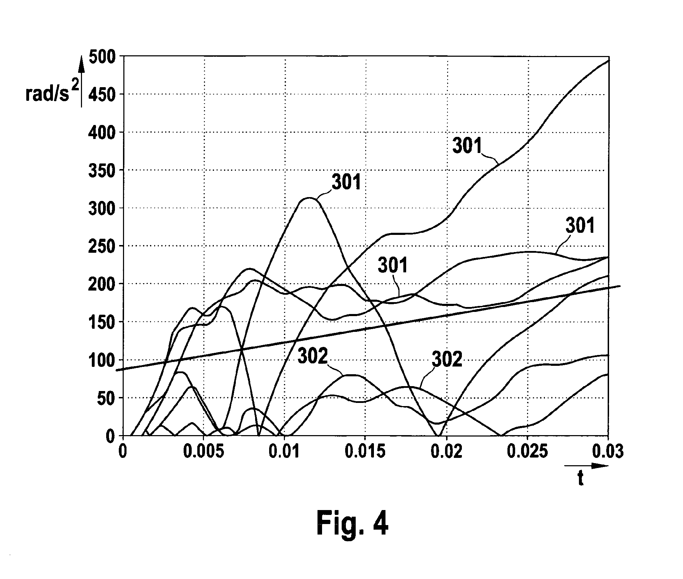

Die Figuren 3 und 4 zeigen einen Vergleich der Signalenergien in rotatorischen und nicht rotatorischen Kollisionen. Je größer die Amplituden der Signale sind, desto höher ist der Signalenergieanteil.

Fig. 3 zeigt eine graphische Darstellung einer tiefpassgefilterten Längsbeschleunigung eines Fahrzeugs über die Zeit. Die Zeit t ist auf der Abszisse und die Längsbeschleunigung g auf der Ordinate aufgetragen. Die unterschiedlichen Kennlinien 301, 302 repräsentieren unterschiedliche Fahrzeugkollisionen. Aus Fig. 3 ist ersichtlich, dass Kennlinien 301, die rotatorische Kollisionen repräsentieren kaum ein Längsbeschleunigungssignal haben. Die Signalenergie ist somit gering. Demgegenüber weisen Kennlinien 302, die nicht-rotatorische Kollisionen repräsentieren ein starkes Längsbeschleunigungssignal auf.

Fig. 4 zeigt eine graphische Darstellung einer RLS-gefilterten Gierbeschleunigung eines Fahrzeugs über die Zeit. Die Zeit t ist auf der Abszisse und die Längsbeschleunigung rad/s$^2$ auf der Ordinate aufgetragen. Aus Fig. 4 ist ersichtlich, dass Kennlinien 301 rotatorischer Kollisionen im Vergleich zu Fig. 3 ein sehr viel stärkeres Gierbeschleunigungssignal zeigen. Die Signalenergie ist somit hoch. Demgegenüber weisen Kennlinien 302 nicht-rotatorischer Kollisionen ein geringes Gierbeschleunigungssignal auf. Die Kombination aus der in Fig. 3 gezeigten linearen Signalenergie und der in Fig. 4 gezeigten rotatorischen Signalenergie gibt einen Hinweis auf die Gesamtsignalenergie. Daher kann die Kollisionsschwere von schweren rotatorischen Kollisionen, beispielsweise EuroNCAP oder Winkelkollisionen, durch die erfindungsgemäße Kombination von den in Fig. 3 gezeigten linearen Beschleunigungssignalen 301, 302 und den in Fig. 4 gezeigten Drehbewegungssignalen 301, 302 besser erkannt werden.

Bei den durchgezogenen Linien in Fig.3 und Fig.4 handelt es sich beispielweise um Schwellwertkurven, der in Abhängigkeit eines crashspezifischen Merkmals variieren können. Die Schwellwertkurve in Fig. 3 markiert beispielweise die maximal zu erwartende Längsbeschleunigung in einer typischen Offset-Kollision standardisierter Crashhallentests. Die Schwellwertkurve in Fig. 4 markiert dagegen die minimal zu erwartende Rotationsbeschleunigung in den oben genannten Offset-Kollisionen. Die Schwellwertkurven können zudem je nach Crashschwere weiter variieren.

Der erfindungsgemäße Ansatz kann beispielsweise in einem Airbagprojekt Gewinn bringend eingesetzt werden, das Daten aus einem Airbag-Steuergerät oder aus einer DCU bezieht. Solche Systeme weisen die Rotationssignale mit ausreichend hoher Abtastfrequenz im Algorithmus auf.

Die beschriebenen Ausführungsbeispiele sind nur beispielhaft gewählt und können miteinander kombiniert werden.

## Patentansprüche

1. Verfahren zur Klassifikation einer Kollision eines Fahrzeugs, das die folgenden Schritte umfasst:

Empfangen eines Linearsignals (1) über eine Schnittstelle, wobei das Linearsignal eine Information über eine Linearbewegung des Fahrzeugs umfasst und wobei basierend auf dem Linearsignal sowohl eine Auslösekollision, ansprechend auf die ein Rückhaltemittel ausgelöst werden soll als auch eine Nicht-Auslösekollision, ansprechend auf die das Rückhaltemittel nicht ausgelöst werden soll erkannt werden kann;

Empfangen eines Rotationssignals (2) über eine Schnittstelle, wobei das Rotationssignal eine Information über eine Rotationsbewegung des Fahrzeugs umfasst und wobei basierend auf dem Rotationssignal sowohl eine Auslösekollision als auch eine Nicht-Auslösekollision erkannt werden kann;

Bestimmen eines linearen Auswertesignals (51), das eine auf dem Linearsignal basierende Information über die Kollision in der Form aufweist, dass das lineare Auswertesignal ausgebildet ist, um bei einer basierend auf dem Linearsignal erkannten Auslösekollision einen ersten Wert und bei einer basierend auf dem Linearsignal erkannten Nicht-Auslösekollision einen zweiten Wert aufzuweisen;

Bestimmen eines rotatorischen Auswertesignals (61), das eine auf dem Rotationssignal basierende Information über die Kollision in der Form aufweist, dass das rotatorische Auswertesignal ausgebildet ist, um bei einer basierend auf dem Rotationssignal erkannten Auslösekollision einen ersten Wert und bei einer basierend auf dem Rotationssignal erkannten Nicht-Auslösekollision einen zweiten Wert aufzuweisen; und

Bereitstellen eines Auswertesignals (71) basierend auf dem Linearsignal und dem Rotationssignal, wobei das Auswertesignal eine Information über die Kollision aufweist, und wobei das Auswertesignal (71) durch eine Verknüpfung (70) des linearen Auswertesignals und des rotatorischen Auswertesignals bestimmt wird.

2. Verfahren gemäß Anspruch 1, bei dem das Linearsignal (1) eine Information über eine lineare Beschleunigung des Fahrzeugs umfasst und zum Erkennen der Auslösekollision und der Nicht-Auslösekollision die folgenden Gleichung ausgewertet wird:

$$a_x = \frac{P_{Lin}}{m} \cdot \frac{1}{dv}$$

mit
$a_x$ : lineare Beschleunigung des Fahrzeugs
$P_{Lin}$ : lineare kinetische Leistung
$m$ : Masse des Fahrzeugs
$dv$ : lineare Geschwindigkeitsänderung des Fahrzeugs.

3. Verfahren gemäß einem der Ansprüche 1 oder 2, bei dem das Rotationssignal (2) eine Information über eine rotatorische Geschwindigkeit des Fahrzeugs umfasst und zum Erkennen der Auslösekollision und der Nicht-Auslösekollision die folgenden Gleichung ausgewertet wird:

$$\ddot{\psi} = \frac{P_{Rot}}{J} \cdot \frac{1}{\dot{\psi}}$$

mit
$\psi$ : rotatorische Beschleunigung des Fahrzeugs
$F_{Rot}$ : rotatorische kinetische Leistung
$m$ : Masse des Fahrzeugs
$\dot{\psi}$ : rotatorische Geschwindigkeit des Fahrzeugs.

4. Verfahren gemäß einem der vorangegangenen Ansprüche, bei dem die Information über die Kollision aus dem Linearsignal (1) und dem Rotationssignal (2) unter Einsatz eines mehrdimensionalen Klassifikators bestimmt wird.

5. Verfahren gemäß einem der vorangegangenen Ansprüche, bei dem das Linearsignal (1) eine Information über eine lineare kinetische Energie des Fahrzeugs und das Rotationssignal (2) eine Information über eine rotatorische kinetische Energie des Fahrzeugs repräsentiert und die Information über die Kollision, basierend auf der linearen kinetischen Energie und der rotatorischen kinetischen Energie bestimmt wird.

6. Verfahren gemäß einem der vorangegangenen Ansprüche, bei dem die Information über die Kollision basierend auf einer linearen Beschleunigung, einer linearen Geschwindigkeit, einer rotatorischen Beschleunigung und einer rotatorischen Geschwindigkeit des Fahrzeugs bestimmt wird.

7. Steuergerät um alle Schritte eines Verfahrens gemäß einem der Ansprüche 1 bis 6 durchzuführen.

8. Computerprogrammprodukt mit Programmcode, der auf einem maschinenlesbaren Träger gespeichert ist, zur Durchführung des Verfahrens nach einem der Ansprüche 1 bis 6, wenn das Programm auf einem Steuergerät ausgeführt wird.

**Claims**

1. Method for classifying a collision of a vehicle which comprises the following steps:

receiving a linear signal (1) via an interface, the linear signal comprising an item of information relating to a linear movement of the vehicle, and it being possible on the basis of the linear signal to detect both a triggering collision to be answered by triggering a retaining means, and a non-triggering collision not to be answered by triggering the retaining means;

receiving a rotation signal (2) via an interface, the rotation signal comprising an item of information relating to a rotating movement of the vehicle, and it being possible, on the basis of the rotation signal, to detect both a triggering collision and a non-triggering collision;

determining a linear evaluation signal (51) which has an item of information, based on the linear signal and relating to the collision, in the form such that the linear evaluation signal is designed to have a first value in the event of a triggering collision detected on the basis of the linear signal, and to have a second value in the event of a non-triggering collision detected on the basis of the linear signal;

determining a rotary evaluation signal (61) which has an item of information, based on the rotation signal and relating to the collision, in the form such that the rotary evaluation signal is designed to have a first value in the event of a triggering collision detected on the basis of the rotation signal, and to have a second value in the event of a non-triggering collision detected on the basis of the rotation signal; and

providing an evaluation signal (71) based on the linear signal and the rotation signal, the evaluation signal having an item of information relating to the collision, and the evaluation signal (71) being determined by a combination (70) of the linear evaluation signal and the rotary evaluation signal.

2. Method according to Claim 1, in which the linear signal (1) comprises an item of information relating to a linear acceleration of the vehicle, and the following equation is evaluated in order to detect the triggering collision and the non-triggering collision:

$$a_x = \frac{P_{Lin}}{m} \cdot \frac{1}{dv}$$

$a_x$ is a linear acceleration of the vehicle,
$P_{Lin}$ is a linear kinetic power,
m is the mass of the vehicle, and
dv is the linear changing speed of the vehicle.

3. Method according to either of Claims 1 and 2, in which the rotation signal (2) comprises an item of information relating to a rotary speed of the vehicle, and the following equation is evaluated in order to detect the triggering collision and the non-triggering collision:

$$\ddot{\psi} = \frac{P_{Rot}}{J} \cdot \frac{1}{\dot{\psi}}$$

where
$\psi$ is the rotary acceleration of the vehicle, $P_{Rot}$ is the rotary kinetic power,
m is the mass of the vehicle, and
$\dot{\psi}$ is the rotary speed of the vehicle.

4. Method according to one of the preceding claims, in which the item of information relating to the collision is determined from the linear signal (1) and the rotation signal (2) by using a multidimensional classifier.

5. Method according to one of the preceding claims, in which the linear signal (1) represents an item of information relating to a linear kinetic energy of the vehicle, and the rotation signal (2) represents an item of information relating to a rotary kinetic energy of the vehicle, and the item of information relating to the collision is determined on the basis of the linear kinetic energy and the rotary kinetic energy.

6. Method according to one of the preceding claims, in which the item of information relating to the collision is determined on the basis of a linear acceleration, a linear speed, a rotary acceleration and a rotary speed of the vehicle.

7. Control device for carrying out all the steps of a method in accordance with one of Claims 1 to 6.

8. Computer program product having program code, which is stored on a machine-readable carrier, for carrying out the method according to one of Claims 1 to 6 when the program is executed on a control device.

**Revendications**

1. Procédé de classification d'une collision d'un véhicule, comprenant les étapes consistant à :

recevoir un signal linéaire (1) par l'intermédiaire d'une interface, dans lequel le signal linéaire comprend une information concernant un mouvement linéaire du véhicule et dans lequel une collision de déclenchement en réponse à laquelle un moyen de retenue doit être déclenché ainsi qu'une collision de non-déclenchement en réponse à laquelle le moyen de retenue ne doit pas être déclenché, peuvent être détectées sur la base du signal linéaire ;
recevoir un signal de rotation (2) par l'intermédiaire d'une interface, dans lequel le signal de rotation comprend une information concernant un mouvement de rotation du véhicule et dans lequel une collision de déclenchement ainsi qu'une collision de non-déclenchement peuvent être détectées sur la base du signal de rotation ;
déterminer un signal d'évaluation linéaire (51) qui présente une information concernant la collision basée sur le signal linéaire sous une forme telle que le signal d'évaluation linéaire soit apte à présenter une première valeur lors d'une collision de déclenchement détectée sur la base du signal linéaire et une seconde valeur lors d'une collision de non-déclenchement détectée sur la base du signal linéaire ;
déterminer un signal d'évaluation de rotation (61) qui présente une information concernant la collision basée sur le signal de rotation sous une forme telle que le signal d'évaluation de rotation soit apte à présenter une première valeur lors d'une collision de déclenchement détectée sur la base du signal de rotation et une seconde valeur lors d'une collision de non-déclenchement détectée sur la base du signal de rotation ; et
fournir un signal d'évaluation (71) sur la base du signal linéaire et du signal de rotation, dans lequel le signal d'évaluation présente une information concernant la collision et dans lequel le signal d'évaluation (71) est déterminé par une combinaison (70) du signal d'évaluation linéaire et du signal d'évaluation de rotation.

2. Procédé selon la revendication 1, dans lequel le signal linéaire (1) contient une information concernant un mouvement linéaire du véhicule et l'équation suivante est évaluée pour détecter la collision de déclenchement et la collision de non-déclenchement :

$$a_x = \frac{P_{Lin}}{m} \cdot \frac{1}{dv}$$

avec
$a_x$ : accélération linéaire du véhicule
$P_{Lin}$ : puissance cinétique linéaire
m : masse du véhicule
du : variation de la vitesse linéaire du véhicule.

3. Procédé selon l'une quelconque des revendications 1 ou 2, dans lequel le signal de rotation (2) contient une information concernant la vitesse de rotation du véhicule et dans lequel l'équation suivante est évaluée pour détecter la collision de déclenchement et la collision de non-déclenchement :

$$\ddot{\Psi} = \frac{P_{Rot}}{J} \cdot \frac{1}{\dot{\Psi}}$$

avec
$\ddot{\psi}$ : accélération de rotation du véhicule $P_{Rot}$ : puissance cinétique de rotation
m : masse
$\dot{\psi}$ : vitesse de rotation du véhicule.

4. Procédé selon l'une quelconque des revendications précédentes, dans lequel l'information concernant la collision est déterminée à partir du signal linéaire (1) et du signal de rotation (2) à l'aide d'un classificateur multidimensionnel.

5. Procédé selon l'une quelconque des revendications précédentes, dans lequel le signal linéaire (1) représente une information concernant l'énergie cinétique linéaire du véhicule et le signal de rotation (2) représente une information concernant l'énergie cinétique de rotation du véhicule et l'information concernant la collision est déterminée sur la base de l'énergie cinétique linéaire et de l'énergie cinétique de rotation.

6. Procédé selon l'une quelconque des revendications précédentes, dans lequel l'information concernant la collision est déterminée sur la base d'une accélération linéaire, d'une vitesse linéaire, d'une accélération de rotation et d'une vitesse de rotation du véhicule.

7. Dispositif de commande destiné à mettre en oeuvre la totalité des étapes d'un procédé selon l'une quelconque des revendications 1 à 6.

8. Produit de programme informatique comportant un code de programme qui est stocké sur un support lisible par machine pour mettre en oeuvre le procédé selon l'une quelconque des revendication 1 à 6 lorsque le programme est exécuté sur un dispositif de commande.

Fig. 1

Fig. 2

Fig. 3

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10149112 A1
- DE 102004029374 A1